## Europäisches Patentamt
## European Patent Office
## Office européen des brevets

(19)

(11) Veröffentlichungsnummer: **0 029 072**
**B1**

(12) **EUROPÄISCHE PATENTSCHRIFT**

(45) Veröffentlichungstag der Patentschrift: **07.12.83**

(51) Int. Cl.³: **B 29 B 1/06, B 01 F 7/16**

(21) Anmeldenummer: **79104551.1**

(22) Anmeldetag: **16.11.79**

(54) Mischer zum kontinuierlichen Mischen von Stoffen, insbesondere Kunststoffen.

(43) Veröffentlichungstag der Anmeldung:
**27.05.81 Patentblatt 81/21**

(45) Bekanntmachung des Hinweises auf die Patenterteilung:
**07.12.83 Patentblatt 83/49**

(84) Benannte Vertragsstaaten:
**AT BE CH FR GB IT LU NL SE**

(56) Entgegenhaltungen:
**DE - A - 1 517 647**
**DE - A - 2 202 185**
**DE - B - 1 258 836**
**FR - A - 2 269 864**
**FR - A - 2 326 968**
**GB - A - 518 854**
**US - A - 3 554 274**

(73) Patentinhaber: **MTI-Mischtechnik Industrieanlagen GmbH**
**Detmolder Strasse 210**
**D-4937 Lage (DE)**

(72) Erfinder: **Honemeyer, Rolf**
**Wellbrockerweg 16**
**D-4900 Herford (DE)**
Erfinder: **Müller, Wolfgang**
**Wewelerstrasse 6**
**D-4920 Lemgo (DE)**

(74) Vertreter: **Patentanwälte TER MEER - MÜLLER - STEINMEISTER**
**Artur-Ladebeck-Strasse 51**
**D-4800 Bielefeld 1 (DE)**

Courier Press, Leamington Spa, England.

Mischer zum kontinuierlichen Mischen von Stoffen, insbesondere Kunststoffen

Die Erfindung betrifft einen Mischer gemäß dem Oberbegriff des Hauptanspruchs.

Derartige Mischer dienen dazu, pulverförmige, körnige, gegebenenfalls auch flüssige Stoffe kontinuierlich zu mischen. Solche kontinuierlich arbeitenden Mischer werden beispielsweise bei der Verarbeitung von Kunststoffen eingesetzt und ummittelbar einer Weiterverarbeitungsmaschine, wie etwa einem Extruder oder einem Kalander vorgeschaltet. Das Mischprodukt kann in diesem Fall unmittelbar im Mischer auf die gewünschte Verarbeitungstemperatur eingestellt werden, so daß keine Zwischenerwärmung zwischen Mischer und Verarbeitungsmaschine erforderlich ist.

Ein Mischer der genannten Art ist aus der DE—B—1 257 553 bekannt. Dieser Mischer umfaßt einen im wesentlichen zylindrischen, senkrechten Behälter, in den das zu mischende Gut durch einen koaxial im oberen Bereich des Behälters angeordneten Einlaß eingegeben wird. Eine koaxial von unten in den Behälter eintretende Welle ist mit einer Anzahl flügelartiger Mischwerkzeuge versehen, die annähernd den gesamten Innenquerschnitt des Behälters überstreichen. Die Mischwerkzeuge sind derart geformt, daß das eingegebene Gut zunächst im inneren Bereich des Behälters abwärts und sodann im äußeren Bereich des Behälters aufwärts transportiert wird. Ein Teil des an der Behälterwand aufsteigenden Mischgutes wird durch einen seitlich im oberen Bereich angebrachten Auslaß abgelassen. Ein anderer Teil des aufsteigenden Mischgutes wird durch ein an dem Auslaß angeordnetes Leitorgan wieder in das Innere des Behälters umgelenkt und zusammen mit dem neu eingegebenen Gut erneut auf die Mischwerkzeuge geleitet. Durch diese Maßnahme soll eine gleichmäßige Durchmischung und Wärmeverteilung des Mischgutes erreicht und insbesondere die Bildung von Wärmenestern vermieden werden.

Bei dem herkömmlichen Mischer ist der Einlaß durch ein senkrechtes Rohr gebildet, das unmittelbar oberhalb der Mischwerkzeuge mit radialen Austrittsschlitzen für das zu mischende Gut versehen ist. Dies hat den Nachteil, daß das neu eingegebene Gut erst unmittelbar an den Mischwerkzeugen mit dem auf die Mischwerkzeuge zurückgeleiteten vorgemischten Gut zusammentrifft. Das vorgemischte Gut kann durch das neu eintretende Mischgut nach außen verdrängt werden, so daß die angestrebte feine Vermischung von neu zugeführtem Gut und zurückgeführtem Mischgut nur teilweise erreicht wird.

Der Erfindung liegt die Aufgabe zugrunde, die gleichmäßige Durchmischung und Wärmeverteilung des Mischgutes bei einem Mischer der eingangs genannten Art weiter zu verbessern.

Diese Aufgabe wird durch die kennzeichnenden Merkmale des Hauptanspruchs gelöst.

Erfindungsgemäß bildet der Einlaß mit dem oberen Ende der die Mischwerkzeuge tragenden Welle einen Ringspalt, durch den das durch den Einlaß eintretende Gut derart abgelenkt wird, daß es sich kegelmantelartig abwärts und nach außen bewegt. Der Ringspalt ist mit Abstand von einem koaxial zu der Welle liegenden Trichter umgeben, in dem sich das zurückgeführte vorgemischte Gut abwärts bewegt. Da somit das vorgemischte Gut nicht nach außen ausweichen kann, kommt es bereits innerhalb dieses Trichters vor Erreichen der Mischwerkzeuge zu einer intensiven Vormischung des neu eingeführten Gutes mit dem zurückgeführten Mischgut. Hierdurch wird eine noch gleichmäßigere Durchmischung und Wärmeverteilung des Mischgutes in dem Mischer erreicht.

Das Merkmal eines Trichters, durch den das neu eingeleitete Gut und das zurückgeführte Mischgut gemeinsam auf die Mischwerkzeuge geleitet werden, ist für sich bereits aus der GB—A—518 854 bekannt. Der dort beschriebene Mischer ist jedoch speziell zum Mischen von Flüssigkeiten vorgesehen, und die Durchmischung des eintretenden Mischgutes mit dem zurückgeführten Mischgut wird in erster Linie dadurch erreicht, daß die Mischwerkzeuge im oberen und unteren Bereich des Behälters zwei gegenläufige Strömungen erzeugen, die in der Mittelebene des Behälters zusammentreffen. Bei diesem Mischer bildet der Einlaß keinen Ringspalt mit der Welle der Mischwerkzeuge, und der Trichter dient nicht zur Vormischung des Mischgutes.

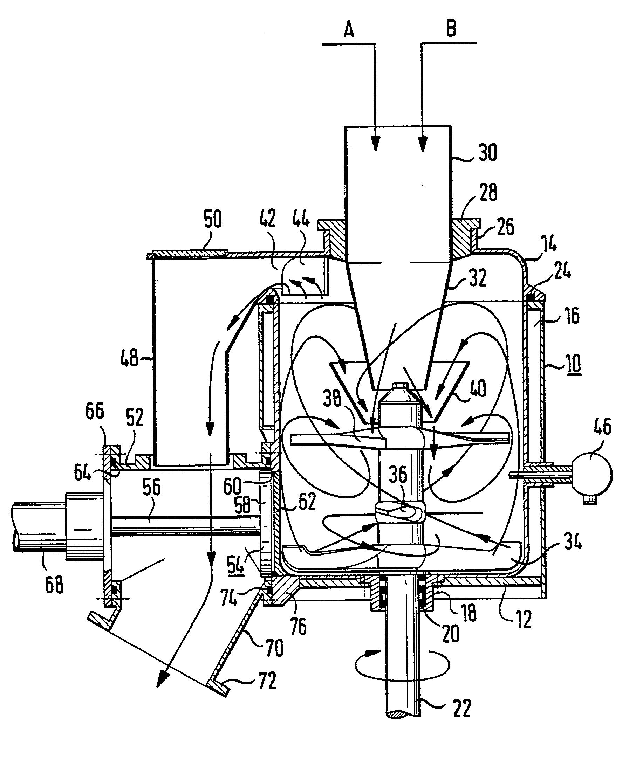

Im folgenden wird ein bevorzugtes Ausführungsbeispiel anhand der Zeichnung näher erläutert.

Die einzige Figur zeigt einen schematischen senkrechten Schnitt durch einen erfindungsgemäßen Mischer.

Der erfindungsgemäße Mischer umfaßt einen im wesentlichen kreiszylindrischen, senkrecht stehenden Mischbehälter 10, der durch einen unteren Behälterboden 12 und einen oberen Deckel 14 abgeschlossen ist. Die zylindrischen Wände des Mischerbehälters 10 sind als Kühl- oder Heizmantel 16 ausgebildet, da er Mischer sow für eine kontinuierliche Hei- als auch Kaltaufbereitung von Mischungen aus wenigstens zwei Komponenten verwendet werden kann.

In der Zylinderachse ist in den Behälterboden 12 eine mit einem Flansch versehene Hülse 18 eingesetzt, die zur Aufnahme geeigneter Dichtelemente 20 für die dynamische Abdichtung des Wellendurchbruches dient. Die Welle 22 ist unterhalb des Mischbehälters 10 mit einem drehzahlregelbaren Antrieb, z.B. Antriebsmotor verbunden, auf den später noch einmal eingegangen werden soll.

Der Deckel 14, der mit dem Mantel des Mischbehälters über eine Dichtung 24 und geeignete, nicht gezeigte Verbindungseinrichtungen verbunden ist, weist eine koaxial zu der Zylinderachse liegende kreisförmige Öffnung auf, deren Rand einen senkrecht aufragenden, hülsenförmigen Ansatz 26 aufweist. In den Ansatz 26 ist ein mit einem Flansch versehener kreisförmiger Ring 28 eingesetzt, in dessen kreisförmiger Mittelöffnung sich ein Einfüllrohr 30 zum Einfüllen der mit A und B bezeichneten Rohprodukte befindet.

Das Einfüllrohr 30 läuft innerhalb des Mischbehälters in seinem unteren Endbereich 32 kegelstumpfförmig nach unten zusammen und liegt mit seinem Ende im wesentlichen in Höhe des oberen Endes der Welle 22.

Die Welle 22 trägt in drei übereinanderliegenden Ebenen Mischwerkzeuge 34, 36, 38, von denen jeweils wenigstens zwei in gleichmäßiger Winkelverteilung in den einzelnen Ebenen angesetzt sind. Die Mischwerkzeuge 34, 36, 38 sind im übrigen in ihrer Winkelanordnung gegenüber den Mischwerkzeugen anderer Ebenen um beispielsweise 90° versetzt. Die unteren Mischwerkzeuge 34 weisen eine untere Kontur auf, die der Kontur des Behälterbodens 12 im wesentlichen entspricht, so daß sie das Produkt vom Behälterboden abschaben. Die oberen Mischwerkzeuge 38 liegen in ihren radialäußeren Endbereichen im wesentlichen in der Drehebene, d.h. senkrecht zur Zeichenebene, sind jedoch in den radial-inneren Bereichen in Drehrichtung schräg nach oben angestellt. Dadurch üben sie in den radial-inneren Bereichen einen Sog auf das Material nach unten aus, während sie in den äußeren Bereichen sowohl nach oben als auch nach unten drücken.

Im Übergangsbereich zwischen dem unteren Ende des Einfüllrohrs 30 und dem oberen Ende der Welle 22 befindet sich ein nach unten kegelstumpfförmig zusammenlaufender Trichter 40, der einen nicht gezeigten Mechanismus zur senkrechten Verstellung aufweist. Der Trichter 40 umgibt sowohl das Einfüllrohr 30 als auch das obere Ende der Welle 22 mit einem gewissen Abstand und endet in einem geringen Abstand oberhalb der Bahn der oberen Mischwerkzeuge 38. Die Mischwerkzeuge 34, 36, 38 sind insgesamt so geformt und angeordnet, daß das Produkt im Bereich unterhalb des oberen Mischwerkzeugs 38 vollständig vermischt wird. Nach vollständiger Durchmischung wird ein Teil des Mischproduktes durch die oberen Mischwerkzeuge 38 nach oben gedrückt, wie die nicht näher bezeichneten Pfeile in der Zeichnung andeuten.

In der oberen linken Ecke des in der Zeichnung dargestellten Mischers befindet sich ein Auslaß 42 für das Material, dem ein Leitorgan 44, beispielsweise ein in seiner Winkelstellung verstellbares Leitblech vorgeschaltet ist, durch den ein beliebig wählbarer Anteil des vor dem Auslaß 42 eintreffenden Mischproduktes durch diesen entnommen bzw. von oben in den Trichter 40 zurückgeführt werden kann. Dieser zurückgeführte Anteil des fertiggestellten Mischproduktes trifft unterhalb des unteren Endes des Einfüllrohres 30 unmittelbar mit den frisch eintretenden Rohprodukten zusammen und wird mit diesen vermischt.

In der in der Zeichnung rechten Wand des Mischbehälters 10 befindet sich ein Temperaturfühler 46, der Steuersignale für den drehzahlregelbaren Antriebsmotor liefert und dessen Drehzahl so einstellt, daß die Temperatur innerhalb des Mischers, die von der Drehzahl abhängig ist, auf einem vorgegebenen Wert mit sehr hoher Genauigkeit festgehalten werden kann.

Angrenzend an den Auslaß 42 befindet sich ein senkrechtes Austrittsrohr 48, das im wesentlichen zylindrisch ausgebildet ist und als oberen Abschluß einen durchsichtigen Deckel 50 aufweist, der zur Überwachung dient und zur Reinigung gelöst werden kann. Das Austrittsrohr 48 tritt an seinem unteren Ende radial in einen Zylinder 52 ein, in dem ein Schließkolben 54 auf einer waagerecht liegenden Kolbenstange 56 geführt ist. Der Schließkolben 54 umfaßt eine am Ende der Kolbenstange 56 angebrachte Trägerplatte 58, die über eine Dichtung 60, etwa einen O-Ring, eine Schließplatte 62 trägt, die in eine entsprechende Öffnung in der Wand des Mischbehälters eingepaßt ist und durch die Kolbenstange 56 zur vollständigen Entleerung des Mischbehälters 10 zurückgezogen werden kann.

An dem in der Zeichnung linken Ende des Zylinders 52 ist über eine Dichtung 64 ein kreisförmiger Deckel 66 befestigt, auf dessen Außenseite ein Axialantrieb 68, etwa ein pneumatischer oder hydraulischer Zylinder, angebracht ist, der zur Bewegung der Kolbenstange 56 dient. Wenn die Kolbenstange 56 zurückgezogen wird, so gelangt sie im wesentlichen bis vor dem Deckel 66, so daß das restliche Material aus dem Mischbehälter 10 durch einen von dem Zylinder 52 schräg nach links und unten verlaufende Auslaßstutzen 70 austreten kann. Der Auslaßstutzen ist mit einem Flansch 72 an seinem freien Ende zur Verbindung mit einer nachgeschalteten Station versehen. Er steht über eine Dichtung 74 und geeignete, nicht näher gezeigte Befestigungseinrichtungen mit dem Deckel 66 einerseits und einem Zwischenstück 76 in Verbindung, das seinerseits mit dem Behälterboden 12 verbunden ist.

Ein derartiger Mischer arbeitet folgendermaßen. Über geeignete, kontinuierlich arbeitende, gravimetrische oder volumetrische Dosiereinrichtungen, die in der Zeichnung nicht gezeigt sind, werden zwei oder mehrere Komponenten in bestimmtem Verhältnis durch das Einfüllrohr 30 in den Mischbehälter 10 bei laufenden Mischwerkzeugen 34, 36, 38 eingebracht. Das eingebrachte, unvermischte Material gelangt durch einen Ringspalt, der zwischen dem unteren Ende des Einfüllrohres 30 und dem Wellenkopf am oberen Ende der Welle 22 gebildet wird, in einen Vormischraum innerhalb des Trichters 40. Hier trifft das neu eingespeiste Material mit dem schon fertig aufbereiteten Material zusammen. Voraussetzung hierfür ist der bereits geschilderte Materialumlauf in dem Mischbehälter 10 sowie eine Füllhöhe, die über dem oberen Rand des Trichters liegt.

Ein Teil des zum Auslaß 42 gelangenden fertig aufbereiteten Materials bewegt sich entlang dem unteren Endbereich 32 des Einfüllrohres 30 abwärts und tritt wiederum in den Vormischraum innerhalb des Trichters 40 ein. Da das neu eindosierte Material nahezu senkrecht aus dem Einfüllrohr 30 nach unten austritt, das bereits gemischte Material innerhalb des Trichters 40 jedoch eine Drehbewegung ausführt, findet bereits hier eine relativ intensive Vermischung und Verteilung der beiden Produktströme statt. Die Mischwerkzeuge 34, 36, 38 ziehen das vorgemischte Material in der Nähe der Welle 22 nach unten in den unteren Bereich des Mischers, der als Hauptmischraum bezeichnet werden kann. Hier erfolgt eine intensive Umschichtung des Materials in senkrechter und waagerechter Richtung.

Die äußeren Enden des oberen Mischwerkzeugs 38 fördern die Fertigmischung nach oben, so daß sie teil-weise austreten und teilweise in den Trichter 40 zurückgeführt werden kann.

Während des gesamten Mischvorganges wird die Temperatur durch Drehzahlregelung des Antriebsmotors konstant gehalten. Reicht dies zur Steuerung nicht aus, so kann in den Kühlmantel 16 ein Heiz- oder Kühlmedium eingespeist werden.

Sollen Mischungen heiß aufbereitet werden, so wird zum Erwärmen des Systems der Mischbehälter 10 nur so weit gefüllt, daß noch kein Austritt von ungenügend aufbereitetem Material erfolgen kann. Die Eindosierung des frischen Materials wird so lange unterbrochen, bis das im Mischbehälter befindliche Material eine bestimmte vorgegebene Temperatur ereicht hat. Anschließend kann auf kontinuierliches Mischen umgeschaltet werden.

Sollen Flüssigkomponenten in Feststoffe eingespeist werden, so empfiehlt sich die Zugabe der Flüssigkomponenten in der Nähe des unteren Endes des Trichters 40. Bei Heißmischungen ist hier das Mischgut schon vorgewärmt und kann so die Flüssigkomponente leichter aufnehmen.

Da verschiedene Materialien verschiedene Fließeigenschaften aufweisen, kann es zweckmäßig sein, daß Einfüllrohr 30 in senkrechter Richtung verschiebbar in den Deckel 14 einzubauen. Das gleiche gilt für den Trichter 40, wie bereits erwähnt wurde. Dadurch lassen sich die Spaltweiten der jeweiligen Ringspalte variieren.

Der Kegelwinkel des Einfüllrohres 30 und des Trichters 40 in der Zeichnung sind als Beispiel zu verstehen. Die jeweiligen Kegelwinkel können größer, jedoch auch kleiner gewählt werden, und sowohl das Einfüllrohr als auch der Trichter können im Extremfall zylindrisch ausgebildet sein.

Durch das erfindungsgemäße Verfahren und den erfindungsgemäßen Mischer ist sichergestellt, daß das Rohmaterial in keinem Falle weitgehend unverändert in den Auslaß gelangen kann, da es bereits in dem Trichter einer ersten Vormischung unterworfen und in dem Hauptmischraum einer weiteren intensiven Durchmischung ausgesetzt wird.

**Patentansprüche**

1. Mischer zum kontinuierlichen Mischen von pulverförmigen, körnigen, ggf. auch flüssigen Stoffen, insbesondere Kunststoffen, mit einem im wesentlichen zylindrischen, senkrechten Mischbehälter (10), in dem sich an einer senkrecht durch den Behälterboden (12) eintretenden Welle (22) eine Anzahl von Mischwerkzeugen (34, 36, 38) befindet, die im mittleren Bereich des Behälters eine abwärts und im äußeren Bereich des Behälters eine aufwärts gerichtete Strömung erzeugen, sowie mit einem Einlaß zum kontinuierlichen Einlassen von pulverförmigen, körnigen oder flüssigen Stoffen und einem Auslaß (42) für das fertige Mischprodukt im oberen seitlichen Bereich des Mischbehälters, an dem ein Leitorgan (44) derart angebracht ist, daß der gemischte Materialstrom teilweise austritt und teilweise von oben in den Behälter zurückgeführt wird, dadurch gekennzeichnet, daß der Einlaß als ein das obere Ende der Welle (22) koaxial umgebendes und mit dieser einen Ringpalt bildendes Einfüllrohr (30) ausgebildet ist und daß dieser Ringspalt durch einen koaxial zur Welle (22) liegenden Trichter (40) umgeben ist.

2. Mischer nach Anspruch 1, dadurch gekennzeichnet, daß der Trichter (40) nach unten konisch zusammenläuft.

3. Mischer nach Anspruch 1 oder 2, dadurch gekennzeichnet, daß der untere Endbereich des Einfüllrohres (30) kegelstumpfförmig zusammenläuft.

4. Mischer nach Anspruch 2 oder 3, dadurch gekennzeichnet, daß der Trichter (40) und/oder das Einfüllrohr (30) in senkrechter Richtung verstellbar sind.

5. Mischer nach einem der Ansprüche 1 bis 4, dadurch gekennzeichnet, daß das am Auslaß (42) vorgesehene Leitorgan (44) verstellbar ist.

6. Mischer nach einem der Ansprüche 2 bis 5, dadurch gekennzeichnet, daß das untere Ende des Trichters (40) in geringem Abstand über dem oberen Mischwerkzeug (38) liegt und mit dem oberen Ende der Welle (22) einen Ringspalt bildet.

7. Mischer nach einem der Ansprüche 1 bis 6, dadurch gekennzeichnet, daß die oberen Mischwerkzeuge (38) im radial-äußeren Bereich im wesentlichen in der Drehebene liegen und im radial-inneren Bereich in Drehrichtung nach oben angestellt sind.

## Revendications

1. Mélangeur pour mélanger en continu des matériaux pulvérulents, granulaires, et le cas échéant également liquides, en particulier des matières synthétiques, comprenant un récipient de mélange (10) sensiblement cylindrique et vertical, dans lequel un certain nombre d'outils de mélange (34, 36, 38) sont montés sur un arbre (22) qui traverse verticalement le fond (12) du récipient, les outils de mélange déterminant dans la partie médiane du récipient un courant dirigé vers le bas et dans la partie externe du récipient un courant dirigé vers le haut, ainsi qu'une entrée destinée à l'alimentation continue de matériaux pulvérulents, granulaires ou liquides et une sortie (42) pour le mélange final, dans la partie latérale supérieure du récipient de mélange, sur laquelle est monté un organe de guidage (44) de manière telle que le courant du matériau de mélange sorte partiellement et soit partiellement renvoyé depuis la haut dans le récipient, caractérisé par le fait que l'entrée est constituée sous forme d'un tube de remplissage (30) entourant coaxialement l'extrémité supérieure de l'arbre (22) et formant avec lui un intervalle annulaire, et que cet intervalle annulaire est entouré par un entonnoir (40) disposé coaxialement à l'arbre (22).

2. Mélangeur selon la revendication 1, caractérisé par le fait que l'entonnoir (40) a une forme conique dirigée vers le bas.

3. Mélangeur selon la revendication 1 ou 2, caractérisé par le fait que la partie terminale inférieure du tube de remplissage (30) a la forme d'un tronc de cône.

4. Mélangeur selon la revendication 2 ou 3, caractérisé par le fait que l'entonnoir (40) et/ou le tube de remplissage (30) sont réglables en sens vertical.

5. Mélangeur selon l'une quelconque des revendications 1 à 4, caractérisé par le fait que l'organe de guidage (44) qui est prévu à la sortie (42) est réglable.

6. Mélangeur selon l'une quelconque des revendications 2 à 5, caractérisé par le fait que l'extrémité inférieure de l'entonnoir (40) est disposée à une faible distance au-dessus de l'outil de mélange supérieur (38) et forme un intervalle annulaire avec l'extémité supérieure de l'arbre (22).

7. Mélangeur selon l'une quelconque des revendications 1 à 6, caractérisé par le fait que les outils de mélange supérieurs (38) sont dans leur partie radiale externe disposés sensiblement dans le plan de rotation et dans leur partie radiale interne sont inclinés vers le haut dans le sens de rotation.

## Claims

1. A mixer for continuously mixing materials in the form of a powder, of grains or of a liquid, more specially synthetic resins, comprising a generally cylindrical, upright mixing vessel (10) in which there are a number of mixing instruments (34, 36 and 38) placed on an upright shaft (22) running into the vessel through the floor (12) of same, said instruments producing a downward current in the middle part of said vessel and an upward current in the outer part of said vessel, an inlet for the continuous inlet of material in the form of a powder, of grains or of a liquid, and an outlet (42) for the ready-processed mixed product in the top side part of the mixing vessel, said outlet (42) having a guide part (44) so positioned thereon that the mixed current of material partly comes out of the vessel and is partly run back into the vessel in a downward direction, characterized in that the inlet is in the form of a filling pipe (30) placed coaxially round the top end of the shaft (22) with a ring-like gap between it and the shaft and in that said ring-like gap has a funnel (40) placed round it, said funnel being coaxial in relation to said shaft (22).

2. The mixer as claimed in claim 1 characterized in that the funnel (40) becomes narrower like a cone in a downward direction.

3. The mixer as claimed in claim 1 or claim 2 characterized in that the lower end part of the filling pipe (30) becomes narrower like the frustum of a cone.

4. The mixer as claimed in claim 2 or claim 3 characterized in that the funnel (40) and/or the filling pipe (30) may be adjusted upwards and downwards.

5. The mixer as claimed in any one of claims 1 to 4 characterized in that the guide part (44) present at the outlet (42) is adjustable.

6. The mixer as claimed in any one of claims 2 to 5 characterized in that the lower end of the funnel (40) is placed at a small distance over the top mixing instrument (38), with a ring-like gap between it and the top end of the shaft (22).

7. The mixer as claimed in any one of claims 1 to 6 characterized in that the top mixing instruments (38) in the radially outer part are generally in the plane of turning and radially inner parts are placed so as to be sloping upwards in the directon of turning.

0 029 072

1